# EUROPÄISCHE PATENTANMELDUNG

(11) **EP 2 843 253 A2**
(43) Veröffentlichungstag der Anmeldung: **04.03.2015**
(21) Anmeldenummer: 14001750.0
(22) Anmeldetag: 17.05.2014
(51) Int. Cl.: F16D 13/64

(54) **Reib- oder Bremslamelle für Kupplungen**

(30) Priorität: 21.08.2013 DE 102013013783
(71) Anmelder: FormTechnologie GmbH, 88239 Wangen (DE)
(72) Erfinder: Wittig, Axel, 88239 Wangen/ Allgäu (DE)
(74) Vertreter: Riebling, Peter

(57) **Zusammenfassung**

Reib- oder Bremslamelle (28) als scheibenförmiges Element einer drehmomentenübertragenden Brems- oder Kupplungseinrichtung, wobei die Reib- oder Bremslamelle (28) am Außen- und am Innenumfang unverzahnt ausgebildet ist und sich schwimmend selbsttätig in radialer und axialer Richtung zwischen dem Innen- und Außenlamellenträger einer Mehrscheiben-Kupplung einstellt.

## Beschreibung

Die Erfindung betrifft eine Reib- oder Bremslamelle für Kupplungen nach dem Oberbegriff des Patentanspruches 1.

Die Erfindung betrifft sowohl Reib- oder Bremslamellen für Doppelreibungskupplungen nach der DE 10 2009 039 467 A1 oder DE 10 2010 051 446 A1 als auch Einfach-Kupplungen, z.B. nach der DE 692 387 C. Die genannten Kupplungen sind nach zwei verschiedenen Gestaltungsprinzipien ausgeführt. Das eine Gestaltungsprinzip wird als "Double-Side-Disc" und das zweite Prinzip als "Single-Side-Disc"-Prinzip bezeichnet.

Die beiden Funktionsangaben beziehen sich darauf, dass bei herkömmlichen Kupplungen an einem drehend angetriebenen Außenlamellenträger eine Anzahl von axial verschiebbar gelagerten Stahllamellen vorhanden ist, welche die Antriebsseite der Kupplung ausbilden.
Gegenüberliegend sind auf einer am Innenlamellenträger angeordneten, axial gerichteten Verzahnung Stahllamellen (abtriebsseitig) angeordnet, wobei im Zwischenraum zwischen den Stahllamellen der Antriebsseite und den Stahllamellen der Abtriebsseite die axial verschiebbaren Belags- oder Reiblamellen angeordnet sind. Generell kann das Gestaltungsprinzip auch dahingehend aufgebaut sein, das abtriebsseitig Belags- oder Reiblamellen und antriebsseitig Stahllamellen zum Einsatz kommen.

Das Double-Side-Disc-Prinzip besteht darin, dass die jeweilige Belagslamelle an beiden Seiten mit einem zugeordneten Reibbelag belegt ist, während bei dem Single-Side-Disc-Prinzip die Belagslamelle nur an einer Seite mit einem Reibbelag versehen ist, während der gegenüberliegende Reibbelag entweder auf der Stahllamelle der Abtriebsseite oder der Antriebsseite angeordnet ist.

Ein Stand der Technik, der ein Double-Side-Disc-Prinzip zeigt, ist beispielsweise mit dem Gegenstand der DE 10 2009 039 467 A1 bekannt geworden. Dort wird angenommen, dass die Antriebsseite mit der Drehzahl m1 und der Geschwindigkeit v1 umläuft. Beide Angaben beziehen sich auf die Drehzahl und Geschwindigkeit des Außenlamellenträgers mit seinen Außenlamellen.

Die Abtriebsseite ist im ungekuppelten Zustand mit der Drehzahl m2 = 0 und der Geschwindigkeit v2 = 0 ausgebildet. Beim Schließen der Kupplung wird damit die Belagslamelle und der Innenlamellenträger auf die Geschwindigkeit m2 = m1 beschleunigt und die Reibgeschwindigkeit v1 geht gegen Null.

Damit wird beträchtliche Reibwärme erzeugt, die nur überwiegend von den Außenlamellenträgern aufgenommen werden kann. Die Stahllamellen und somit Außenlamellen werden thermisch symmetrisch belastet.

Bei dem Single-Side-Disc-Prinzip nach dem Stand der Technik ist wiederum die Antriebsseite mit der Drehzahl m1 umlaufend, und zwar mit einer Geschwindigkeit v1. Der Außenlamellenträger ist mit den Außenlamellen versehen, die jedoch einseitig mit einem Reibbelag belegt sind. Die Abtriebsseite hat im ungekuppelten Zustand die Drehzahl m2 = 0 und die Geschwindigkeit v2 = 0.

Der Innenlamellenträger mit den Innenlamellen, die einseitig mit einem Reibbelag beklebt sind, stehen deshalb still. Beim Schließen der Kupplung wird m2 = m1 und die Reibgeschwindigkeit wird von v1 zu Null.

Die Reibwärme wird von den Innen- und Außenlamellen aufgenommen. Beide Lamellen werden asymmetrisch thermisch belastet. Eine solche Kupplung ist empfindlich gegen Überhitzung und Tellerung der Lamellen.

Bei dem bekannten Single-Side-Disc-Prinzip wird die Stahllamelle der Antriebs- und der Abtriebsseite gestanzt, und anschließend einseitig mit einem Reibbelag beklebt. Durch den nur ca. 20-prozentigen Traganteil (Anteil am Reibschluss) besteht im Betrieb an den Flanken im Bereich der Verzahnung des Innen- und Außenlamellenträgers Verschleiß (Einschlagkerben). Um diesen Verschleiß zu minimieren, ist es bekannt, die Innen- und Außenlamellenträger jeweils zu nitrieren, um eine höhere Härte der Verzahnung zu erreichen. Dadurch entstehen jedoch unerwünschte Mehrkosten.

Bei einem Paar von Innen- und Außenlamellenträgern nach dem Single-Side-Disc-Prinzip wird damit ein höherer Herstellungsbetrag aufgewendet als vergleichsweise bei Lamellenträgern nach dem Double-Side-Disc-Prinzip.

Demgemäß ist Nachteil des Standes der Technik, sowohl nach dem Double-Side-Disc-Prinzip als auch nach dem Single-Side-Disc-Prinzip, dass bei dem Double-Side-Disc-Prinzip ein höheren Fertigungsaufwand gegeben ist, weil auf einer Belagslamelle beidseitig Reibbeläge aufgeklebt werden müssen. Dadurch entstehen hohe Kosten, die unerwünscht sind.

Ferner muss eine solche Belagslamelle mehrschichtig aufgebaut sein, denn es bedarf eines inneren, hochfesten Kerns oder bevorzugt einer Kernscheibe aus Metall, die von beiden Seiten mit Belägen beklebt wird. Der Metallkern muss über seine Verzahnung das Drehmoment auf den Innenlamellenträger übertragen, was voraussetzt, dass eine mittlere Metallscheibe verwendet wird, um die erforderlichen Drehmomente über die Verzahnung auf den Innenlamellenträger zu übertragen.

Die hierfür erforderliche Dicke der Belagslamelle, die nach dem Stand der Technik aus einer mittleren Metallscheibe und beidseits aufgeklebten Reibbelägen besteht, hat eine unerwünschte Zunahme der bewegten Massen zur Folge, und damit wird das Trägheitsmoment der Kupplung erhöht, was unerwünscht ist.

Weiterhin müssen die Stahllamellen von der Antriebs- und der Abtriebsseite aufgrund des symmetrischen Wärmeeintrags in Richtung zum Innenlamellenträger (Abtriebsseite) eine besondere - der Wärmeleitung dienenden - Stärke (Dicke) aufweisen, was sich nachteilig auf die (zu minimierende) Gesamtlänge der Kupplung auswirkt. Werden nämlich die Stahllamellen auf der Abtriebsseite zu dünn gefertigt, fehlt es an der notwendigen Wärmeableitung und die Kupplung überhitzt.

Beim Single-Side-Disc-Prinzip entsteht eine asymmetrische thermische Belastung, weil die Stahllamellen der Antriebs- und der Abtriebsseite einseitig mit einem Reibbelag beklebt sind. Die Wärme wird sowohl zur Antriebs- als auch zur Abtriebsseite (also sowohl zum Innenlamellenträger als auch zum Außenlamellenträger) abgeführt, was zu einer dünneren Dicke der Stahllamellen auf der Antriebs- und Abtriebsseite führen könnte, jedoch ist damit eine erhöhte Tellerung (Durchbiegung) der Stahllamellen verbunden, die eine Überhitzung des Lamellenpaketes möglich erscheinen lässt.

Die DE 38 01 911 A1 zeigt unverzahnte Lamellenscheiben zwischen denen frei drehbar gehaltenen Trägerscheiben angeordnet sind, wobei die Trägerscheiben unmittelbar mit Reiblamellen verbunden sind. Dabei stützen sich die Trägerscheiben mit Hilfe von hülsenartigen Elementen am inneren Bauteil der Kupplung ab und sind zur radialen Fixierung der Reiblamellen auf diese hülsenartigen Elementen bzw. zylindrische Anschläge angewiesen. Die hülsenartigen Führungselemente bergen jedoch die Gefahr der Verkantung der Trägerscheiben in sich.

Die US 6 006 885 A zeigt eine ölgestützte Anordnung der Reiblamellen. Diese Reiblamellen weisen radial verlaufende Nuten auf, die mit Öl gefüllt sind und mit Öl gefüllten Nuten an den gegenüberliegenden Statorscheiben zusammen wirken. Damit muss diese Kupplung mit Öl gefüllt werden, um einen genügenden Zwangsabstand zwischen den Reiblamellen und den Stator- und Rotorlamellen zu erreichen. Zur Zentrierung der Reiblamellen sind an den Außenumfängen der Reiblamellen sowie der Metalllamellen korrespondierende Schrägfasen angeordnet, die zur Zentrierung ineinander greifen.Somit sind die Reiblamellen nicht frei fliegend ausgebildet. Ebenso besteht durch die Zwangszentrierung die Gefahr der Verkeilung der ineinander greifenden Teile.

Die DE 11 15 997 B zeigt zwei im Abstand zueinander angeordnete und axial federvorbelastete Bolzen, an denen in gegenseitigem Abstand in radialer Richtung unterbrochene Blechlamellenscheiben angeordnet sind. Diese fluchten in radialer Richtung mit abtriebsseitig angeordneten, weiteren Blechlamellenscheiben. Zwischen den antriebs- und abtriebsseitigen Blechlamellenscheiben sindverschiebbare Ringscheiben aus Kunststoff angeordnet, die bei Betätigung einer Feder eine Reibverbindung zwischen den Lamellensätzen bewirken und damit eine Welle abbremsen. Die Ringscheiben haben den Nachteil, dass sie auf radial unterbrochene Blechlamellen wirken und hierdurch nicht ihre vollständige Reibungskraft auf die gesamte Fläche der Blechlamellen ausüben können, da die Blechlamellen jeweils radial außen und radial innen eingespannt sind. Wegen der Unterbrechung zwischen den in radialer Richtung zueinander fluchtenden inneren und äußeren Lamellen kann keine vollständige Übertragung der Reibungskraft mit den dazwischen liegenden Kunststoffscheiben erfolgen. Damit besteht der Nachteil eines hohen Verschleißes, weil beim Einkuppeln die Kunststoffscheibe sowohl den feststehenden einen Reibbelag als auch den anderen umlaufenden Reibbelag verbindt. Somit besteht die Gefahr der Knickung der Kunststoffscheiben, weil die beiden Teile mit unterschiedlicher Geschwindigkeit aneinander vorbeilaufen und sich an der Kunststoffscheibe reibend anlegen.

Der Erfindung liegt deshalb ausgehend von den beiden Antriebsprinzipien einer Mehrscheibenkupplung mit zwischen einem Innen- und Außenlamellenträger angeordneten Brems- oder Reiblamellen die Aufgabe zugrunde, solche Brems- oder Reiblamellen so zu verbessern, dass bei geringeren Herstellungskosten das Massenträgheitsmoment und das Gewicht der Kupplung reduziert wird, wobei gleichzeitig eine Reduzierung der Baulänge bei verbessertem Wärmemanagement gegeben ist.

Die gestellte Aufgabe wird durch die Merkmale des Anspruches 1 gelöst.

Mit der Lösung der gestellten Aufgabe besteht der Vorteil, dass bezogen auf eine Kupplung nach dem Stand der Technik mit gleicher Drehmomentenübertragung bei der Kupplung nach der Erfindung eine kürzere Baulänge bei geringerer Wärmeentwicklung gegeben ist.

Wenn man die neuartige Kupplung auf die gleiche Baulänge wie den Stand der Technik bezieht, besteht der Vorteil, dass eine höhere Anzahl von Reibpaarungen auf der gleichen Baulänge untergebracht werden können, und somit ein höheres Drehmoment bei geringerer Wärmeentwicklung übertragen werden kann.

Wesentliches Merkmal der Erfindung ist, dass im Zwischenraum zwischen den Stahllamellen der Antriebs- und der Abtriebsseite nunmehr scheibenförmige Reib- oder Bremslamellen angeordnet sind, die erfindungsgemäß nur noch als fliegende Kupplungslamellen ausgebildet sind.

Wenn in der folgenden Beschreibung die erfindungsgemäßen Reib- oder Bremslamellen als Kupplungslamellen bezeichnet werden, so ist dies nicht einschränkend zu verstehen. Es ist bekannt, dass bei hydraulischen Fahrzeugkupplungen die Kupplungslamellen auch als Bremslamellen arbeiten. Demzufolge bezieht sich der Schutzbereich der Erfindung sowohl auf Kupplungs- als auch auf Bremslamellen, obwohl der einfacheren Beschreibung wegen in der folgenden Beschreibung nunmehr Kupplungslamellen beschrieben werden.

Mit der Ausbildung der Reib- oder Bremslamellen als frei fliegend ausgebildete Kupplungslamellen besteht der Vorteil, dass im Gegensatz zur Ausbildung der (verzahnten) Kupplungslamellen nach dem Stand der Technik nunmehr bei den fliegend ausgebildeten Kupplungslamellen auf jegliche Verzahnung in Richtung auf den Innenlamellenträger verzichten können, weil sie sich in radialer Richtung im Zwischenraum zwischen den antriebs- und abtriebsseitigen Stahllamellen der Kupplung freifliegend selbsttätig einstellen. Es bedarf in Richtung zum Außen- und/oder Innenlamellenträger keiner radialen am Außen- oder Innenumfang angeordneter Verzahnungen

Die erfindungsgemäßen fliegenden Kupplungslamellen haben demnach weder eine Verzahnung zum Außenlamellenträger noch eine Verzahnung zum Innenlamellenträger. Sie stellen sich selbsttätig in radialer und axialer Richtung ein, weil sie sich entweder mit ihrem Außenumfang am Innenumfang des in Außenlamellenträgers zentrieren oder - wahlweise - mit ihrem Innenumfang am Außenumfang des Innenlamellenträgers zentrieren. Diese Bereiche können daher auf eine drehmomentenübertragende Verzahnung verzichten, sie können also glatt ausgebildet sein. Selbstverständlich kann in diesem Bereich auch eine Verzahnung angeordnet sein, die jedoch nicht der DrehmomentenÜbertragung auf die Brems- oder Reiblamelle dienen muß.

Die freifliegenden Kupplungslamellen stellen sich auch selbsttätig in axialer Richtung im Zwischenraum zwischen den antriebs- und abtriebsseitigen Stahllamellen ein, weil dieser Zwischenraum mit einem Öl oder einem anderen Wärmeträgermedium gefüllt ist, und hierdurch aufgrund von - im Drehbetrieb auftretenden - Turbulenzen ein Lauf in einem Ölbad oder einem gasförmigen Wärmeträgermedium stattfindet, sodass die Kupplungslamellen im ungekuppelten Zustand mit etwa der Hälfte der Geschwindigkeit des Außenlamellenträgers umlaufen, wenn der Innenlamellenträger stillsteht. Sie werden demnach nur von der Strömung im Bereich zwischen den Metalllamellen mitgenommen.

Die Erfindung beansprucht eigenständigen Schutz für die Ausbildung der Kupplungs- oder Bremslamelle, sowie eigenständigen Schutz für die damit ausgerüstete Kupplungs- oder Bremseinrichtung.

Der Unterschied zwischen der Reiblamelle nach dem Stand der Technik und der vorliegenden Erfindung lässt sich am besten durch Vergleich mit der DE 619 382 C erläutern. Während die DE 619 382 C eine Kupplungslamelle mit wahlweise verzahntem Außen- oder Innenumfang zeigt, sieht die Erfindung eine Kupplungslamelle vor, die weder eine Außenverzahnung noch eine Innenverzahnung oder andere drehmomentenübertragende Elemente aufweist. Sie ist demnach bevorzugt am Außen- und Innenumfang glatt, weil sie nicht auf eine drehfeste Verbindung mit dem Innen- oder Außen-Lamellenträger angewiesen ist.

Dieser Unterschied ist auch durch Vergleich einer Reiblamelle nach der DE 31 00 586 A1 mit der Erfindung erkennbar. Die dort dargestellten Reiblamellen haben zwar keine Verzahnung am Außenumfang, jedoch Mitnehmer in Form von Bügeln, die in zugeordnete Aufnahmen am Innenumfang des Radgehäuses (entsprechend dem Außenlamellenträger) eingreifen. Auf solche Drehmomenten-übertragenden Mitnehmer am (Außen- und/oder Innen-) Umfang der Kupplungslamelle verzichtet die Erfindung.

Es wird angenommen, dass die Antriebsseite mit dem Außenlamellenträger mit der Drehzahl m1 und der Geschwindigkeit v1 umläuft.

Im nicht gekuppelten Zustand hat die Abtriebsseite eine Drehzahl m2 = 0 und eine Geschwindigkeit v2 = 0.

Die erfindungsgemäße Kupplungslamelle in der Ausbildung als schwimmender Reib- oder Bremsbelag richtet sich nun selbsttätig entweder am Innendurchmesser des Außenlamellenträgers an der Antriebsseite bei selbsttätiger Einstellung eines Abstandsspiels oder am Außendurchmesser des Innenlamellenträgers auf der Abtriebsseite ebenfalls unter selbsttätiger Einstellung eines radialen Außenabstandes aus. Der Ort der Ausrichtung ergibt sich aus der Größe des Innendurchmessers im Vergleich zur Größe des Außendurchmessers der Kupplungslamelle im Hinblick auf den Abstand den der Innendurchmesser zum Außendurchmesser des Innenlamellenträgers oder im Hinblick auf den Abstand den der Außendurchmesser in Richtung auf den Innendurchmesser des Außenlamellenträgers hat. Die Zentrierung der Kupplungslamelle erfolgt an dem Teil von Innen- oder Außenlamellenträger, zu dem der Abstand am geringsten ist.

Beim Schließen der Kupplung und/oder Bremse wird m2 = m1, und die Reibgeschwindigkeit der fliegenden Reiblamellen wird von ½ v1 zu Null.

Da die Reiblamelle freischwimmend ist, wird die Reibgeschwindigkeit bei Schaltbeginn immer ½ v1 als maximaler Wert sein, und im geschlossenen Zustand ist dieser Geschwindigkeitswert gleich Null.

Somit wird die Reibwärme gleichmäßig jeweils hälftig von der Außenlamelle und der Innenlamelle aufgenommen. Es kommt demzufolge zu einer gleichmäßigen thermischen Belastung von Innen- und Außenlamelle, und die thermische Belastung einer solchen erfindungsgemäßen Kupplung und/oder Bremse ist bei diesem Aufbau am geringsten.

Das heißt im Umkehrschluss, dass mit einem solchen Kupplungs- oder Bremsaufbau höhere Leistungen übertragen werden als vergleichsweise bei Kupplungs- oder Bremsaufbauten, die im Stand der Technik im Einsatz sind.

Aufgrund dieser geringeren thermischen Belastung ist es nun erstmals möglich, auch die Metalllamellen sowohl der Antriebs- als auch der Abtriebsseite sehr viel dünner auszugestalten, weil diese nur noch geringer Wärmeströme übertragen müssen.

Ein weiterer Vorteil der Erfindung liegt darin, dass die Kupplungslamelle als solche dünner aufgebaut werden kann. Im Vergleich zu einer Belagslamelle nach dem Stand der Technik, die mit einer Verzahnung drehfest mit dem abtriebsseitigen Innenlamellenträger gekuppelt ist, muss wegen der notwendigen Wärmeabführung und Drehmomentenübertragung eine Belagslamelle nach dem Stand der Technik immer mehrschichtig aufgebaut sein und wegen der Notwendigkeit der Drehmomentenübertragung eine mittlere Metallscheibe aufweisen.

Dieses Erfordernis entfällt nach der Erfindung, denn es reicht aus, die frei sich einstellende, fliegende Reib- oder Bremslamelle mindestens einschichtig auszubilden. Sie kann in einer bevorzugten Ausgestaltung aus einem einschichtigen Papiermaterial gebildet sein, welches möglicherweise mit einem Kunststoffmaterial getränkt ist. Ein solches Kunststoffmaterial, mit dem die Reib- oder Bremslamelle getränkt ist, soll der mechanischen Verfestigung des Papiermaterials dienen.

Selbstverständlich sieht die Erfindung auch vor, dass die erfindungsgemäße, fliegende Reib- oder Bremslamelle auch mehrschichtig aufgebaut ist. Sie kann aus verschiedenen Papierschichten bestehen, sie kann aber auch aus Papier-Kunststoff-Verbundwerkstoffen bestehen oder kann sogar aus textilen Fäden oder Garnen oder Kohlestofffasern gewebt oder gewirkt sein.

Unter anderem schließt die Erfindung nicht aus, dass die erfindungsgemäße fliegende Reib- oder Bremslamelle eine Metallscheibe trägt, obwohl die Erfindung - im Gegensatz zum Stand der Technik - hierauf nicht angewiesen ist

Es können also beliebige fliegende Reib- oder Bremslamellen mit einschichtigen oder mehrschichtigen, auch aus mehreren Verbundstoffen bestehende Zusammensetzungen als Reib- oder Bremslamellen verwendet werden.

Vom Massengewicht her ist die fliegende Kupplungslamelle auf jeden Fall leichter als vergleichsweise die zum Stand der Technik gehörende Belagslamelle, die stets einen Stahlkern aufweist. Damit gelingt es im entscheidenden Maß, die Massenträgheit der gesamten Kupplung zu reduzieren. Weil die Kupplungslamelle stets immer mit der halben Geschwindigkeit umläuft als vergleichsweise die Belagslamelle nach dem Stand der Technik, die stillsteht, besteht der Vorteil, dass ein sauberes und schnelleres Kuppeln möglich ist und dass der axiale Abstand zwischen der fliegend angeordneten Kupplungslamelle und der zugeordneten Stahllamelle auf der Antriebs- und Abtriebsseite nochmals reduziert werden kann, weil ein großvolumiger Ölfluss oder der Fluss eines anderen flüssigen oder gasförmigen Wärmeträgermediums zur Verbesserung der Wärmeabfuhr nicht mehr notwendig ist. Es kann demnach auf großvolumige Ölströme im Zwischenraum zwischen der antriebs- und der abtriebsseitigen Stahllamelle verzichtet werden.

Weil die fliegende Kupplungslamelle nach der Erfindung bereits schon mit der halben Umdrehungsgeschwindigkeit im Ölbad mitläuft, ist ein weicheres Kuppeln gegeben.

Die Erfindung ist jedoch nicht auf Nasskupplungen oder Nass-Bremsen beschränkt, bei denen die Kupplungslamellen in einem Ölbad oder einem anderen gasförmigen Wärmeträgermedium laufen.

Ebenso betrifft die Erfindung auch trockene Kupplungen mit fliegenden Reibbelägen. Es wird auf jeden Fall auch ein geringerer Verschleiß an den einander zugeordneten Teilen erwartet, weil die Reib- oder Bremslamelle mit ihren Reibbelägen immer mit der halben Geschwindigkeit der Stahllamelle auf der Antriebsseite mitläuft, und hierdurch der Kupplungsschock oder der Kupplungsspitzenwert bei herkömmlichen Kupplungen nicht erreicht wird.

Der Begriff "Stahllamelle", der vorstehend verwendet wurde, soll nicht einschränkend für die Erfindung sein. Der Begriff "Stahllamelle" wird in verallgemeinerter Form als Metall-Lamelle verwendet, weil es nach der Erfindung nun erstmals möglich ist, statt Stahllamellen auch andere metallische Lamellen zu verwenden, insbesondere Lamellen aus einer Leichtmetalllegierung, was die Massenträgheit und das Gewicht der Kupplung noch weiter reduziert.

Demnach darf der Begriff Stahllamelle nicht einschränkend für die vorliegende Erfindung verstanden werden. Es wird stattdessen der allgemeinere Begriff "Metalllamelle" verwendet werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: ein Schnitt durch eine Ausführungsform nach der Erfindung mit fliegenden Reiblamellen
Figur 2: eine schematisierte, vergrößerte Darstellung der Zeichnung nach Figur 5
Figur 3: ein räumlicher Schnitt durch eine Anordnung nach Figuren 5 und 6
Figur 4: eine räumliche, perspektivische Darstellung einer Kupplung nach der Erfindung mit fliegenden Reiblamellen
Figur 5: Schnitt durch eine Kupplungslamelle nach der Erfindung entsprechend der Linie A-A
Figur 6: perspektivische Ansicht der Kupplungslamelle nach Figur 5
Fig. 7: ein Schnitt durch eine 1. Ausführungsform der Kupplungslamelle
Figur 8: ein Schnitt durch eine 2. Ausführungsform der Kupplungslamelle
Figur 9: Schnitt durch eine 3. Ausführungsform der Kupplungslamelle
Figur 10: Schnitt durch eine 4. Ausführungsform der Kupplungslamelle

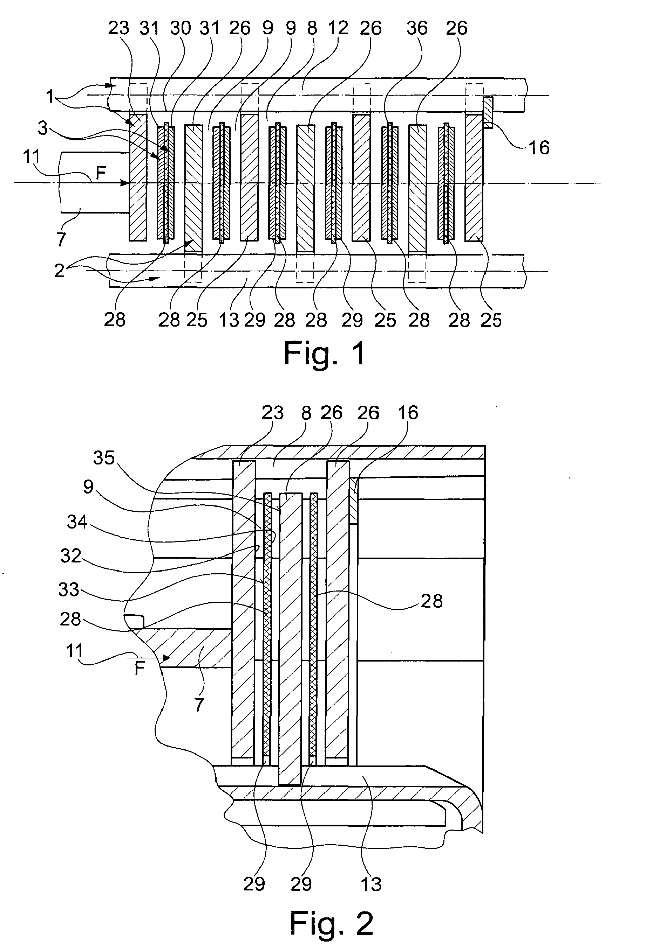

Die Kupplungen nach den dargestellten Figuren 1 und 2 sind jeweils rotationssymmetrisch zur Rotationsachse 10 ausgebildet. Es handelt sich jeweils um einen Teilschnitt durch eine rotationssymmetrische Kupplung.

Der Kupplungsschluss wird durch Aufbringung einer Kraft F über einen Kolben 7 erreicht, der mit seiner Fläche in Pfeilrichtung 11 eine Andruckkraft erzeugt, die von der ersten, linksseitig angeordneten Startlamelle 23 als axiale Verschiebungskraft in das Lamellenpaket eingeleitet wird.

Bei Einwirkung einer durch den Kolben 7 erzeugten axialen Andruckkraft 11 wird somit das Lamellenpaket geschlossen, indem alle Lamellen beim Kupplungsschluss axial ineinander verschoben werden, und zwar gegen einen ortsfesten Sprengring 16, der am Außenlamellenträger 12 angeordnet ist.

Die Figuren 1 bis 4 zeigen die erfindungsgemäße neuartige Kupplung, die sich dadurch auszeichnet, dass im Zwischenraum zwischen den antriebsseitigen Metalllamellen 25 und den abtriebsseitigen Metalllamellen 26 nun jeweils fliegend gelagerte Reib- oder Bremslamellen 28 angeordnet sind.

Zwar zeigt die Zeichnung nach Figur 1, dass eine solche Reib- oder Bremslamelle 28 auch mehrschichtig aufgebaut sein kann und aus einem Kern und beidseitig angebrachten Reibbelägen bestehen kann. Hierauf ist die Erfindung jedoch nicht beschränkt. Wie die Figur 2 zeigt, kann der mehrschichtige Aufbau einer Reib- oder Bremslamelle auch durch einen einschichtigen Aufbau ersetzt werden, wobei die Reib- oder Bremslamelle 28 dann nur noch aus einem kunststoffverstärkten oder metallfaser- oder kohlenstoffverstärkten Papiermaterial oder einem anderen tränkbaren Material (z.B. einem Vlies und/oder Gewirk und/oder Gestrick) besteht.

Wichtig ist, dass sich die jeweilige Reib- oder Bremslamelle 28 im Aufnahmeraum 8 freischwimmend selbsttätig radial und axial einstellt und je nach dem Abstand zum Außenumfang des Innenlamellenträgers 13 oder dem radialen Abstand zum Innenumfang des Außenlamellenträgers 12 sich entweder in Richtung auf den Innenlamellenträger 13 selbsttätig auf diesem zentriert oder sich selbsttätig am Innenumfang des Außenlamellenträgers 12 zentriert.

Mit einem Verkantungsspiel in axialer Richtung muss nicht gerechnet werden, weil die fliegend gelagerte Reib- oder Bremslamelle 28 in sich so steif ist, dass sie mit ihrem Innenumfang entweder auf den Außenumfang des Innenlamellenträgers oder mit seinem Außenumfang an der Innenseite des Außenlamellenträgers zentrisch geführt ist, sodass ein Verkantungsspiel nicht zu befürchten ist.

Wichtig ist demnach, dass sich die jeweils fliegend gelagerte Reib- oder Bremslamelle 28 im Aufnahmeraum 8 zwischen den antriebs- und abtriebsseitigen Metalllamellen 25, 26 selbsttätig in axialer und radialer Richtung schwimmend einstellt, und erst beim Schluss der Kupplung, wenn die axiale Andruckkraft 11 über den Kolben 7 aufgebracht wird, verschwinden die Zwischenräume 9 zwischen den einander zugeordneten Reibflächen 32, 33, 34, 35 und die Reib- oder Bremslamelle 28 überträgt das Drehmoment zwischen den antriebs- und abtriebsseitigen Metalllamellen 25, 26.

Demnach bildet die (nächst dem Kolben 7 angeordnete) Startlamelle 23 mit ihrer Innenseite eine erste Reibfläche 32 in Richtung auf die linke Reibfläche 33 an der fliegend gelagerten Reib- oder Bremslamelle 28, und deren gegenüberliegende Reibfläche 34 bildet eine weitere, die axiale Andruckkraft des Kolbens 7 übertragende Fläche zu der Reibfläche 35 an der linken Seite der abtriebsseitigen Metalllamelle 26 aus.

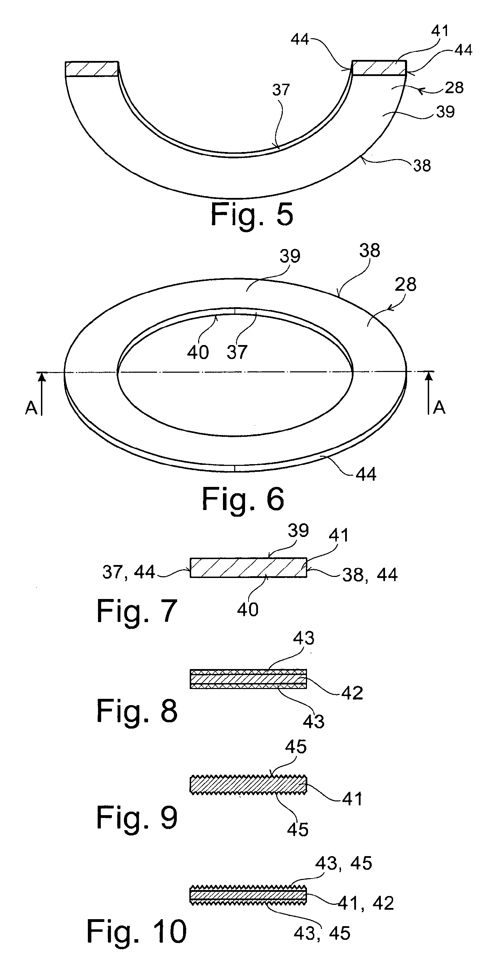

Die Erfindung ist nicht darauf beschränkt, dass die Reibflächen der Reib- oder Bremslamelle 28 durchgehend glatt und strukturiert ausgebildet sind. Dies wird anhand der Figuren 7 bis 10 näher beschrieben.

In einer anderen Ausgestaltung der Erfindung kann es vorgesehen sein, dass die Reibflächen 33, 34 der jeweils fliegend sich einstellenden Reiblamelle 28 strukturiert ausgebildet sind. Unter einer solchen Struktur wird verstanden, dass im Winkel zur Drehrichtung schräg verlaufende Noppen, Erhöhungen oder auch Nuten zur besseren Ableitung des Ölstroms oder eines anderen flüssigen oder gasförmigen Wärmeträgermediums von der Oberfläche der Reiblamelle 28 vorgesehen sind, der im Zwischenraum 9 jeweils links- und rechtsseitig der Reiblamelle 28 besteht.

Die Figur 5 zeigt einen Schnitt durch eine scheibenförmige Reib- oder Bremslamelle gemäß der Linie A-A in Figur 6. Die Querschnittsfläche 41 ist bevorzugt rechteckig. Sie kann jedoch auch quadratisch oder bombiert ausgebildet sein. Demnach besteht die Querschnittsfläche 41 aus 2 sich einander gegenüberliegenden Oberflächen 39,40, an die sich senkrechte Seitenflächen 44 anschließen. Der Innenumfang 37 der Reib- oder Bremslamelle 28 wird demnach durch die eine Seitenfläche 44 gebildet, während der Außenumfang 38 durch die gegenüberliegende Seitenfläche 44 gebildet wird. Die Seitenfläche 44 können auch abgerundet ausgebildet sein.

Im Ausführungsbeispiel nach Figur 5-7 sind die Oberflächen 39,40, welche die Reib-Flächen bilden, relativ glatt ausgebildet.

In Figur 8 ist ein mehrschichtige Aufbau einer Reib- oder Bremslamelle gezeigt. Beiderseits einer mittleren Kernschicht 42 schließen sich gegenüberliegende Mantelschichten 43 an, die gegebenenfalls strukturiert ausgebildet sein können.

Die Figur 9 zeigt als weiteres Ausführungsbeispiel dass die in Fig. 7 dargestellten Oberflächen 39, 40 auch mit einer Riffelung 45 oder mit Nuten, Noppen oder anderen reibungserhöhenden Strukturen versehen sein können.

Solche Strukturen 45 können auch bei dem mehrschichtigen Aufbau nach Figur 8 vorgesehen werden. Dies ist in Figur 10 dargestellt.

Ferner ist nicht lösungsnotwendig, dass die Reib- oder Bremslamelle 28 eben ausgebildet ist. Die Oberfläche kann leicht gewellt ausgebildet sein, um ein selbsttätiges Rückfedern in die nicht gekuppelte Stellung zu ermöglichen. Sie wirkt dann in der Art einer Tellerfeder. Damit wird eine kupplungsseitige Rückstellfeder eingespart, die eine Rückstellkraft erzeugt, die ansonsten bei derartigen Kupplungen notwendig ist. Bei Entfall der kupplungsseitigen Rückstellfeder wird die Baulänge durch die in axialer Richtung federnd ausgebildete Reiblamelle noch weiter minimiert.

Bei der schwimmend oder fliegend gelagerten Reib- oder Bremslamelle 28 ergibt sich radial einwärts ein Spaltraum 29, der vom Ölstrom oder dem flüssigen oder gasförmigen Wärmeträgerstrom durchflossen ist, und der für eine automatische Zentrierung der Reib- oder Bremslamelle 28 auf dem Außenumfang des Innenlamellenträgers 13 sorgt.

Eine solche Anordnung kann jedoch auch vollkommen ohne Öl betrieben werden, es handelt sich dann um eine Trockenkupplung mit einem gasförmigen Wärmeträgermedium.

Dann ergibt sich radial auswärts am Außenumfang der fliegenden Reib- oder Bremslamelle 28 ein Spaltraum 36 in Richtung auf den Innenumfang des Außenlamellenträgers 12. Auch in diesem Bereich stellt sich die Reib- oder Bremslamelle fliegend selbsttätig ein.

Nachdem ein üblicher Zwischenraum 9 auf beiden Seiten der Reibflächen 33, 34 der Reib- oder Bremslamelle 28 etwa 1 mm beträgt, besteht auch nicht die Gefahr, dass sich eine solche fliegend gelagerte Reib- oder Bremslamelle 28 unerwünscht in axialer Richtung verkantet. Sie wird stets verkantungsfrei gerade geführt.

Während die Figur 1 eine aus mehreren Schichten bestehende Reib- oder Bremslamelle 28 mit einer Kernschicht 30 und zwei äußeren Belagsschichten 31 zeigt, zeigt die Figur 2 einen einschichtigen Aufbau einer solchen Reib- oder Bremslamelle.

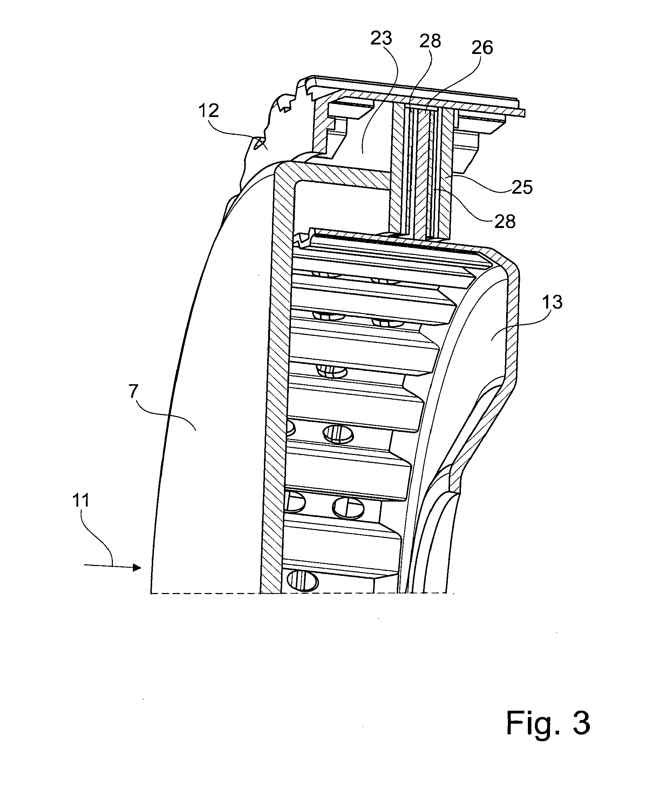

Die Figur 3 zeigt einen perspektivischen Schnitt durch eine Kupplung nach der Darstellung nach Figur 2, wo die gleichen Teile mit den gleichen Bezugszeichen versehen sind.

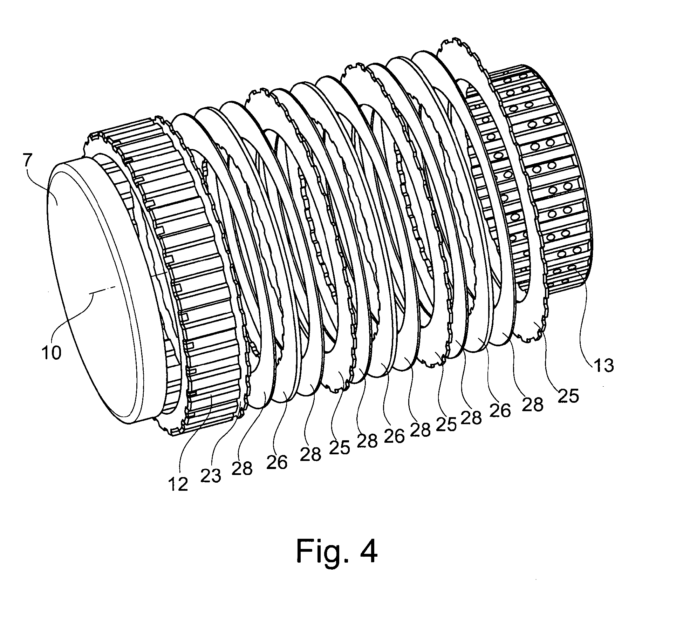

Dies gilt auch für die Figur 4, wo die gleichen Teile mit den gleichen Bezugszeichen versehen sind.

Im Vergleich zu einer Kupplung nach dem Stand der Technik werden auf der gleichen Baulänge wesentlich mehr schwimmend gelagerte Reib- oder Bremslamellen angeordnet, woraus sich ergibt, dass mit einer Kupplung gleicher Baulänge, wie beim Stand der Technik ein wesentlich höheres Drehmoment bei geringerer Wärmeentwicklung übertragen werden kann.

Aus zeichnerischen Vereinfachungsgründen wurde lediglich die Darstellung nach Figur 4 etwas weiter auseinandergezogen als vergleichsweise die Darstellung nach Figur 4, wobei jedoch beide Darstellungen die gleiche Baulänge der Kupplung zeigen.

Die perspektivische Darstellung in Figur 4 zeigt den voll rotationssymmetrischen Aufbau der erfindungsgemäßen Kupplung. Ausgehend von der eine Verzahnung aufweisenden Startlamelle 23, die sich am Innenumfang des Außenlamellenträgers 12 anlegt folgt auf diese die erfindungsgemäßen Reib-oder Bremslamelle 28, die sich frei im Zwischenraum zwischen dem Innenlamellenträger 13 und Außenlamellenträger 12 einstellt.

An der anderen Seite der Reib- oder Bremslamelle 28 ist die abtriebsseitige Metalllamelle 26 angeordnet, die sich mit ihrer innen liegenden Verzahnung in drehfestem, jedoch axial verschieblichen Eingriff mit der Verzahnung des Innenlamellenträgers 13 befindet. Darauf folgt wieder eine Reib- oder Bremslamelle 28, an deren gegenüberliegenden Seite sich die antriebsseitige Metalllamellen 25 anschließt. Diese weist eine außen liegende Verzahnung auf, die sich im formschlüssigen, jedoch axial verschieblichen Eingriff mit dem Innenumfang des Außenlamellenträgers 12 befindet.

Die vorher beschriebenen Reibpaarungen wiederholen sich in beliebiger Weise über die Länge der Kupplung gesehen

### Zeichnungslegende

- 1: Antriebsseite
- 2: Abtriebsseite
- 3: Reibwärme
- 4:
- 5:
- 6:
- 7: Kolben
- 8: Aufnahmeraum
- 9: Zwischenraum
- 10: Rotationsachse
- 11: Andruckkraft
- 12: Außenlamellenträger
- 13: Innenlamellenträger
- 14:
- 15:
- 16: Sprengring
- 17:
- 18:
- 19:
- 20:
- 21:
- 22:
- 23: Startlamelle
- 24:
- 25: Metalllamelle (Antriebsseite)
- 26: Metalllamelle (Abtriebsseite)
- 27:
- 28: Reib- oder Bremslamelle (fliegend)
- 29: Spaltraum (innen)
- 30: Kernschicht
- 31: Belagsschicht
- 32: Reibfläche
- 33: Reibfläche
- 34: Reibfläche
- 35: Reibfläche
- 36: Spaltraum
- 37: Innenumfang
- 38: Außenumfang)
- 39: Oberfläche (vorne)
- 40: Oberfläche (hinten)
- 41: Querschnittsflächen
- 42: Kernschicht
- 43: Manteischicht
- 44: Seitenfläche
- 45: Riffelung

## Patentansprüche

1. Reib- oder Bremslamelle (28) als scheibenförmiges Element einer drehmomentenübertragenden Brems- oder Kupplungseinrichtung, wobei die Reib- oder Bremslamelle (28) am Außen- und am Innenumfang unverzahnt ausgebildet ist, **dadurch gekennzeichnet, dass** radial einwärts ein Spaltraum (29) zwischen Reib -oder Bremslamelle (28) und Innenlamellenträger¹ und radial auswärts ein Spaltraum (36) zwischen Außenumfang der Reib- oder Bremslamelle (28) und Außenlamellenträger (12)² existiert, zwischen denen die Reib- oder Bremslamelle (28) freischwimmend³ gelagert ist..

2. Reib- oder Bremslamelle nach Anspruch 1, **dadurch gekennzeichnet, dass** die Reib- oder Bremslamelle (28) am Außen- und am Innenumfang glatt ausgebildet ist.

3. Reib- oder Bremslamelle nach Anspruch 1 oder 2, **dadurch gekennzeichnet, dass** die Reib- oder Bremslamelle (28) am Außen- und am Innenumfang frei von drehmomentenübertragenden Elementen ist.

4. Reib- oder Bremslamelle nach einem der Ansprüche 1 bis 3, **dadurch gekennzeichnet, dass** die Reib- oder Bremslamelle (28) aus einem harzgetränkten Papiermaterial besteht.

5. Reib- oder Bremslamelle nach einem der Ansprüche 1 bis 4, **dadurch gekennzeichnet, dass** die Reib- oder Bremslamelle(17, 18, 9, 24; 27, 28) aus Papier-Kunststoff-Verbundwerkstoffen besteht oder aus textilen Fäden oder Garnen oder Kohlestofffasern gewebt oder gewirkt ist.

6. Reib- oder Bremslamelle nach einem der Ansprüche 1 bis 5, **dadurch gekennzeichnet, dass** sie einen rechteckförmigen Querschnitt (41) aufweist.

7. Reib- oder Bremslamelle nach einem der Ansprüche 1 bis 6, **dadurch gekennzeichnet, dass** sie aus mindestens einer Kernschicht (42) und beiderseits die Kernschicht abdeckenden Mantelschichten (43) besteht.

8. Reib- oder Bremslamelle nach einem der Ansprüche 1 bis 7, **dadurch gekennzeichnet, dass** die Reibflächen eine Riffelung (45) oder eine andere reibungserhöhende Struktur aufweisen.

9. Kupplung bestehend aus einem drehend angetriebenen Außenlamellenträger (12), an dem eine Anzahl von axial verschiebbar gelagerten Metalllamellen (25) drehfest angeordnet sind, welche die Antriebsseite (1) der Kupplung ausbilden, und die Abtriebsseite (2) durch einen Innenlamellenträger (13) gebildet ist, auf dessen axial gerichteter Verzahnung abtriebsseitige Metalllamellen (26) angeordnet, und im Zwischenraum (9) zwischen den Metalllamellen (25) der Antriebsseite (1) und den Metalllamellen (26) der Abtriebsseite (2) axial verschiebbare Reib- oder Bremslamellen (28) angeordnet sind, **dadurch gekennzeichnet, dass** die Reib- oder Bremslamellen (28) freifliegend gelagert sind und sich selbsttätig im Zwischenraum (9) zwischen den antriebs- und abtriebsseitigen Metalllamellen (25, 26) in radialer und axialer Richtung einstellen.
